# EUROPÄISCHE PATENTANMELDUNG

(11) **EP 2 930 107 A1**
(43) Veröffentlichungstag der Anmeldung: **14.10.2015**
(21) Anmeldenummer: 15162464.0
(22) Anmeldetag: 02.04.2015
(51) Int. Cl.: B64D 11/06

(54) **FLUGZEUGSITZVORRICHTUNG**

(30) Priorität: 07.04.2014 DE 102014104928
(71) Anmelder: Recaro Aircraft Seating GmbH & Co. KG, 74523 Schwäbisch Hall (DE)
(72) Erfinder: Bendele, Philipp, 74676 Niedernhall (DE); Philipp, Adrian, 74544 Michelbach (DE)
(74) Vertreter: Daub, Thomas

(57) **Zusammenfassung**

Die Erfindung geht aus von einer Flugzeugsitzvorrichtung mit einem tragenden Rahmen (10) und mehreren, an dem tragenden Rahmen (10) befestigten Strukturbauteilen (12, 14, 16, 18, 20, 22, 24).

Es wird vorgeschlagen, dass wenigstens eines der Strukturbauteile (12, 14, 16, 18, 20, 22, 24) dazu vorgesehen ist, werkzeuglos an dem tragenden Rahmen (10) und/oder an einem anderen Strukturbauteil (12, 14, 16, 18, 20, 22, 24) montiert zu werden.

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einem tragenden Rahmen und mehreren, an dem tragenden Rahmen befestigten Strukturbauteilen vorgeschlagen worden.

Die Aufgabe der Erfindung besteht insbesondere darin, eine gattungsgemäße Vorrichtung mit verbesserten Eigenschaften hinsichtlich Servicefreundlichkeit und einer schnellen Wartung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einem tragenden Rahmen und mehreren, an dem tragenden Rahmen befestigten Strukturbauteilen.

Es wird vorgeschlagen, dass wenigstens eines der Strukturbauteile dazu vorgesehen ist, werkzeuglos an dem tragenden Rahmen und/oder an einem anderen Strukturbauteil montiert zu werden. Unter einer "Flugzeugsitzvorrichtung" soll dabei insbesondere eine Vorrichtung verstanden werden, die zumindest einen Teil eines Flugzeugsitzes oder wahlweise den gesamten Flugzeugsitz ausbildet. Unter einem "tragenden Rahmen" soll dabei insbesondere eine Vorrichtung aus wenigstens einem Element verstanden werden, die ein Grundgerüst für einen Flugzeugsitz ausbildet und über die der Flugzeugsitz vorzugsweise auf einer Aufständerebene aufgeständert ist. Dabei ist der tragende Rahmen dazu vorgesehen, Kräfte, die in den Flugzeugsitz eingeleitet werden, beispielsweise durch eine Gewichtskraft eines auf dem Flugzeugsitz sitzenden Passagiers, in einen Kabinenboden, auf dem der Flugzeugsitz aufgeständert ist, weiterzuleiten. Dabei ist es denkbar, dass der tragende Rahmen aus einer Konstruktion verschiedener Strukturbauteile besteht oder aus einer einzelnen Unterbauplatte, wie beispielsweise einem Plinth, auf dem der Flugzeugsitz aufgeständert ist. Unter einem "Strukturbauteil" soll dabei insbesondere ein Bauteil des Flugzeugsitzes verstanden werden, das dazu vorgesehen ist, Kräfte aufzunehmen und zu übertragen.

Unter "an dem tragenden Rahmen befestigt" soll dabei insbesondere verstanden werden, dass Elemente, wie insbesondere die Strukturbauteile, direkt oder indirekt mit dem tragenden Rahmen gekoppelt, also an den tragenden Rahmen angebunden sind. Dabei ist unter "an dem tragenden Rahmen befestigt" auch zu verstehen, dass ein Strukturbauteil über ein oder mehrere, dazwischen angeordnete Strukturbauteile mit dem tragenden Rahmen verbunden ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "werkzeuglos zu montieren" soll dabei insbesondere verstanden werden, dass ein Element, wie insbesondere ein Strukturbauteil, händisch montiert und demontiert werden kann. Dabei ist bei einer werkzeuglosen Montage oder Demontage insbesondere kein Werkzeug nötig, um das Strukturbauteil zu befestigen und/oder zu lösen. Durch eine erfindungsgemäße Ausgestaltung können ein oder mehrere Strukturbauteile besonders einfach und schnell montiert und/oder demontiert werden. Dadurch kann erreicht werden, dass eine Montagezeit oder eine Demontagezeit von Strukturbauteilen vorteilhaft kurz gehalten werden kann, wodurch insbesondere eine Wartung und Reparatur vorteilhaft wenig Zeit in Anspruch nimmt, wodurch laufende Kosten, insbesondere im Service, eingespart werden können.

Weiter wird vorgeschlagen, dass die Flugzeugsitzvorrichtung wenigstens ein manuell betätigbares Befestigungsmittel aufweist, das dazu vorgesehen ist, das wenigstens eine der Strukturbauteile an dem tragenden Rahmen und/oder an einem anderen Strukturbauteil anzubringen. Unter einem "manuell betätigbaren Befestigungselement" soll dabei insbesondere ein Befestigungselement verstanden werden, das von einer Person händisch betätigbar ist, so dass keine zusätzlichen Werkzeuge erforderlich sind, um das Betätigungselement zu betätigen. Dadurch kann ein Strukturbauteil besonders einfach werkzeuglos montierbar an den tragenden Rahmen montiert werden.

Ferner wird vorgeschlagen, dass eines der Strukturbauteile als eine Rückenlehne ausgebildet ist. Unter einer "Rückenlehne" soll dabei insbesondere ein Element des Flugzeugsitzes verstanden werden, das sich, von einem Sitzboden des Flugzeugsitzes aus, von der Aufständerebene weg erstreckt und an einem hinteren Ende des Sitzbodens angeordnet ist, sodass sich in montiertem Zustand eine auf dem Flugzeugsitz sitzende Person mit dem Rücken an der Rückenlehne abstützen kann. Dadurch kann die Rückenlehne besonders vorteilhaft und einfach an den tragenden Rahmen angebunden werden.

Des Weiteren wird vorgeschlagen, dass eines der Strukturbauteile als eine Sitzpfanne ausgebildet ist. Unter einer "Sitzpfanne" soll dabei insbesondere ein Element verstanden werden, das als ein Teil eines Sitzbodens des Flugzeugsitzes ausgebildet ist, wobei die Sitzpfanne den Sitzboden an den tragenden Rahmen der Flugzeugsitzvorrichtung anbindet. Dadurch kann die Sitzpfanne besonders vorteilhaft und einfach an den tragenden Rahmen angebunden werden.

Zudem wird vorgeschlagen, dass eines der Strukturbauteile als eine zentrale Kinematikeinheit ausgebildet ist. Unter einer "zentralen Kinematikeinheit" soll dabei insbesondere eine Einheit verstanden werden, die aus mehreren, für die Verstellung eines Flugzeugsitzes vorgesehenen Aktuatoreinheiten mit Aktuatoren und Mechaniken besteht, mittels deren der Flugzeugsitz in seine verschiedenen Stellungen verfahren werden kann. Dadurch kann eine Kinematik zur Verstellung des Flugzeugsitzes einfach an den tragenden Rahmen angebunden werden.

Es wird weiter vorgeschlagen, dass eines der Strukturbauteile als eine Kopfstütze ausgebildet ist. Unter einer "Kopfstütze" soll dabei insbesondere ein Element verstanden werden, das an einem oberen Ende der Rückenlehne der Flugzeugsitzvorrichtung angebracht und dazu vorgesehen ist, dass eine auf dem Flugzeugsitz sitzende Person ihren Kopf daran abstützen kann. Dadurch kann die Kopfstütze besonders vorteilhaft und einfach an den tragenden Rahmen angebunden werden.

Weiter wird vorgeschlagen, dass eines der Strukturbauteile als eine Aktuatoreinheit mit einem Aktuator ausgebildet ist. Unter einer "Aktuatoreinheit" soll dabei insbesondere eine Montageeinheit aus zumindest einem Aktuator und einer Vorrichtung, wie insbesondere einem Rahmen, verstanden werden, an der der Aktuator befestigt ist, wobei die komplette Aktuatoreinheit, sofern sie korrekt, beispielsweise an eine Stromversorgung, angeschlossen ist, funktionsfähig ist. Dadurch kann ein Aktuator zur Steuerung des Flugzeugsitzes besonders einfach und vorteilhaft in den tragenden Rahmen der Flugzeugsitzvorrichtung integriert werden.

Zudem wird vorgeschlagen, dass das wenigstens eine betätigbare Befestigungsmittel dazu vorgesehen ist, von oben betätigt zu werden. Darunter, dass das "Befestigungsmittel dazu vorgesehen ist, von oben betätigt zu werden", soll dabei insbesondere verstanden werden, dass das Befestigungsmittel von einer Person von oben, also von einer der Aufständerebene abgewandten Seite her, betätigt werden kann. Dadurch kann das Befestigungsmittel besonders vorteilhaft betätigt werden und eine Montage und/oder Demontage des entsprechenden Strukturbauteils kann besonders vorteilhaft, schnell und in einer ergonomischen Haltung erfolgen.

Weiterhin wird vorgeschlagen, dass das Befestigungsmittel als ein Federbolzen ausgebildet ist. Dadurch kann das Befestigungsmittel besonders vorteilhaft und einfach durch eine Person betätigbar ausgebildet werden.

Ferner wird vorgeschlagen, dass die Flugzeugsitzvorrichtung wenigstens eine Sicherungsfeder aufweist, die das Befestigungsmittel zur Anbindung in einem montierten Zustand sichert. Dadurch kann eine Verbindung mittels des Befestigungsmittels besonders vorteilhaft und sicher ausgebildet werden.

Es wird weiter vorgeschlagen, dass das als Aktuatoreinheit ausgebildete Strukturbauteil dazu vorgesehen ist, komplett vormontiert mit dem Aktuator in den tragenden Rahmen und/oder ein anderes Strukturbauteil eingebaut zu werden. Unter "komplett vormontiert" soll dabei insbesondere verstanden werden, dass die Aktuatoreinheit als komplett vormontiertes Modul in die Flugzeugsitzvorrichtung eingebaut werden kann und dort lediglich noch befestigt und mit verschiedenen Anschlüssen an entsprechende Anschlüsse der Flugzeugsitzvorrichtung angeschlossen werden muss. Dadurch kann ein Aktuator besonders einfach und schnell montiert und demontiert werden, wodurch ein Wechsel eines Aktuators bei einem Flugzeugsitz vorteilhaft schnell erfolgen kann.

Es wird weiter vorgeschlagen, dass zumindest vier Strukturbauteile werkzeuglos an dem tragenden Rahmen montierbar sind. Unter "zumindest vier Strukturbauteilen" soll dabei insbesondere verstanden werden, dass wenigstens vier Strukturbauteile der Flugzeugsitzvorrichtung, in einer besonderen Ausgestaltung wenigstens sechs Strukturbauteile und in einer besonders vorteilhaften Ausgestaltung eine Mehrzahl oder alle Strukturbauteile, werkzeuglos an dem tragenden Rahmen montierbar sind. Dadurch kann die Flugzeugsitzvorrichtung und dadurch der Flugzeugsitz besonders vorteilhaft für eine schnelle Montage und Demontage von Strukturbauteilen ausgebildet werden, wodurch eine Servicezeit für eine Reparatur des Flugzeugsitzes besonders vorteilhaft kurz ausgestaltet werden kann.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes mit einer erfindungsgemäßen Flugzeugsitzvorrichtung,
- Fig. 2: eine schematische Darstellung der Flugzeugsitzvorrichtung, dargestellt ohne demontiertes, als Sitzpfanne ausgebildetes Strukturbauteil,
- Fig. 3: eine Detailansicht eines als zentrale Kinematikeinheit ausgebildeten Strukturbauteils mit zwei als Aktuatoreinheiten ausgebildeten Strukturbauteilen in der Flugzeugsitzvorrichtung,
- Fig. 4: eine Detailansicht einer Anbindung eines als Aktuatoreinheit ausgebildeten Strukturbauteils,
- Fig. 5: eine Schnittansicht, wobei die Anbindung eines als Aktuatoreinheit ausgebildeten Strukturbauteils näher gezeigt ist,
- Fig. 6: eine Detailansicht einer Anbindung eines als Aktuatoreinheit ausgebildeten Strukturbauteils in einem Schnitt,
- Fig. 7: eine Schnittansicht des als zentrale Kinematikeinheit ausgebildeten Strukturbauteils mit zwei als Aktuatoreinheiten ausgebildeten Strukturbauteilen in der Flugzeugsitzvorrichtung,
- Fig. 8: eine Detailansicht einer Anbindung eines als Aktuatoreinheit ausgebildeten Strukturbauteils in einem Schnitt,
- Fig. 9: eine Detailansicht der Anbindung eines als Kopfstütze ausgebildeten Strukturbauteils an ein als Rückenlehne ausgebildetes Strukturbauteil, und
- Fig. 10: eine Schnittansicht durch eine Anbindung eines als Rückenlehne ausgebildeten Strukturbauteils an das als zentrale Kinematikeinheit ausgebildete Strukturbauteil.

### Beschreibung des Ausführungsbeispiels

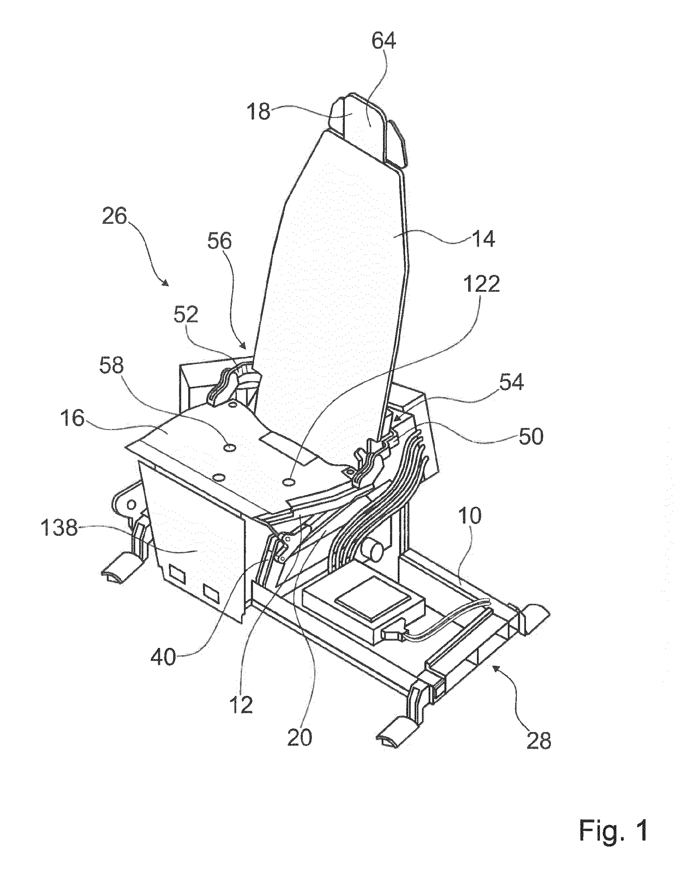

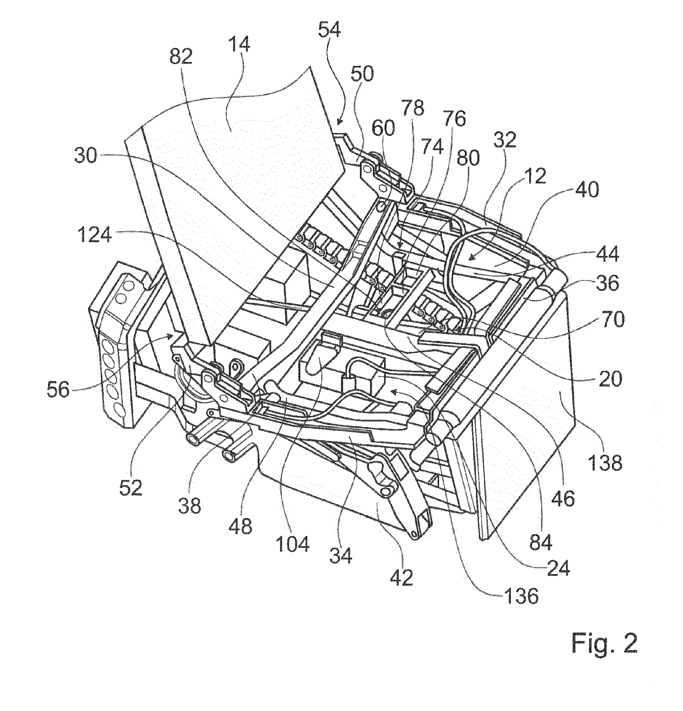

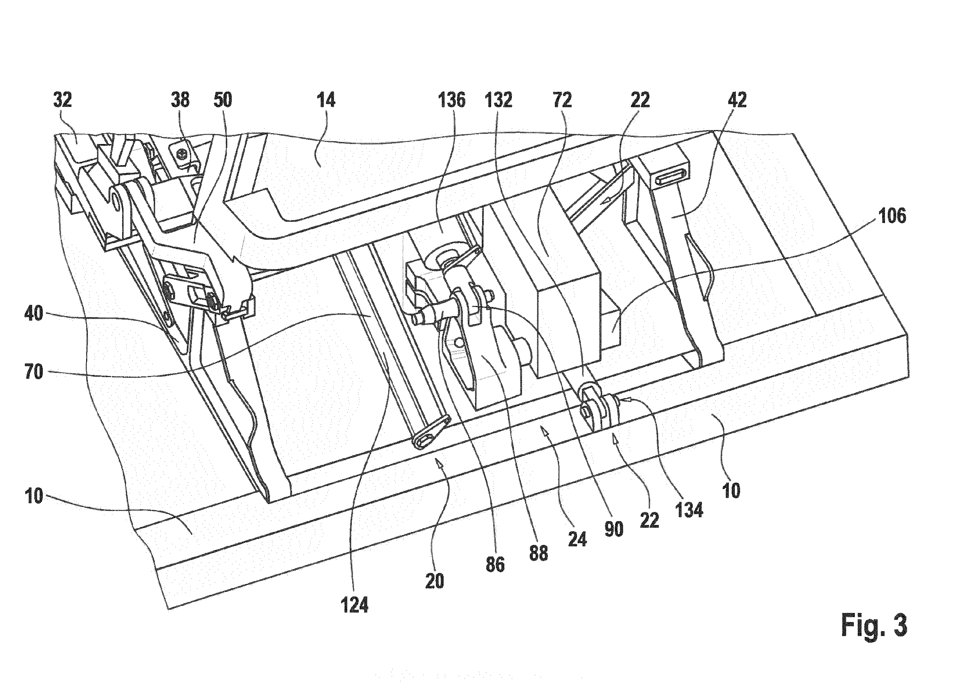

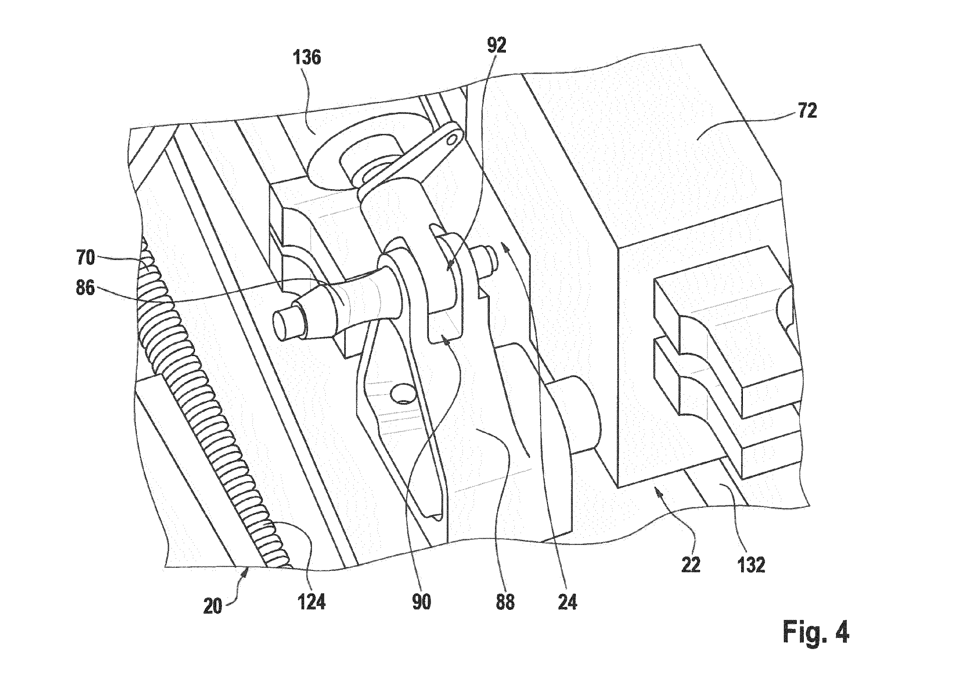

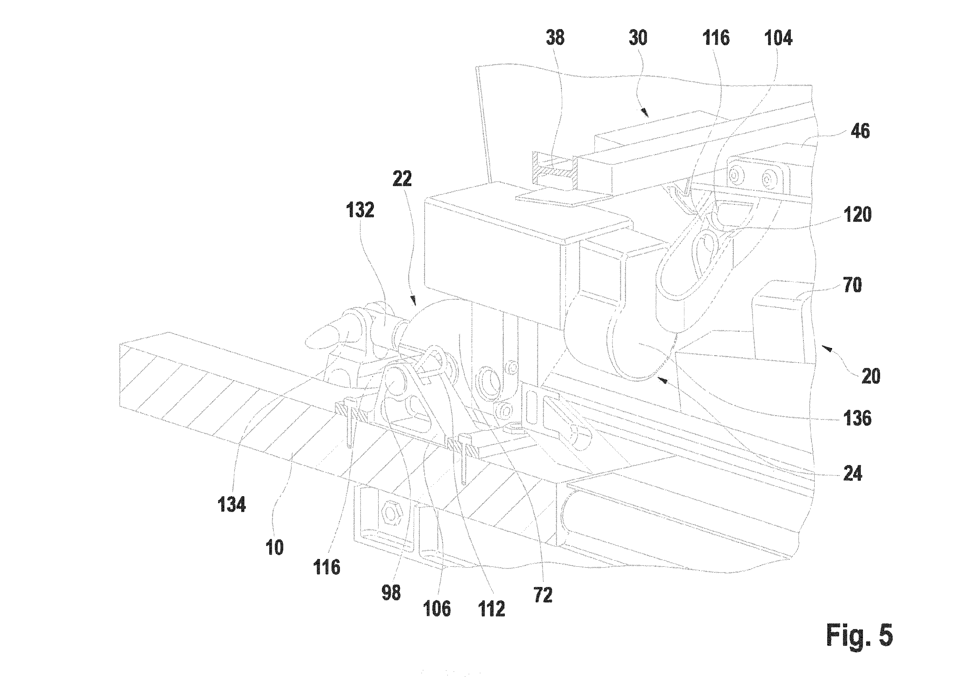

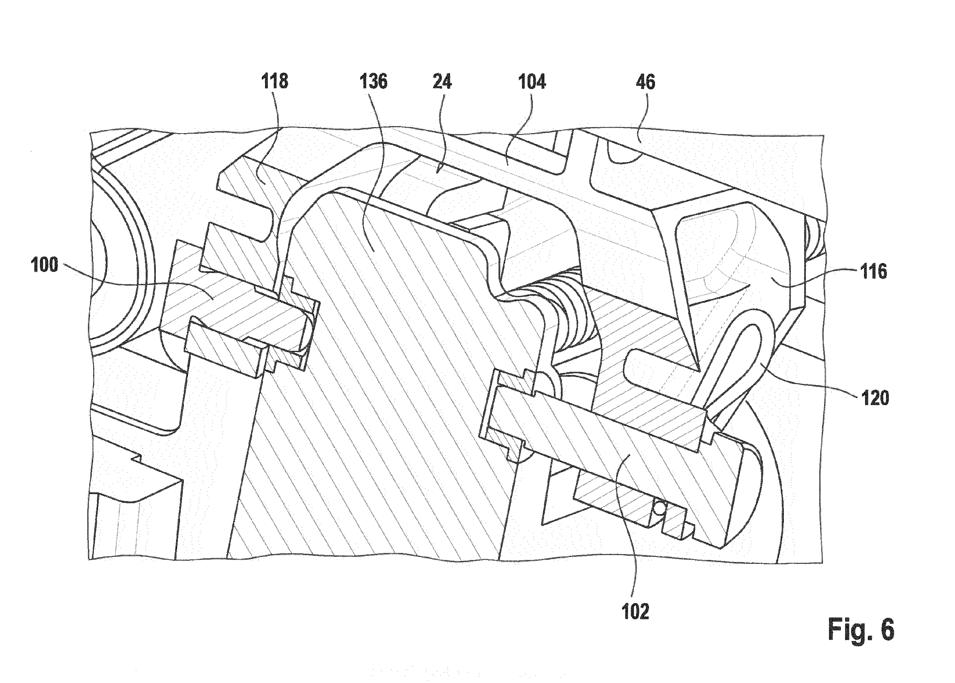

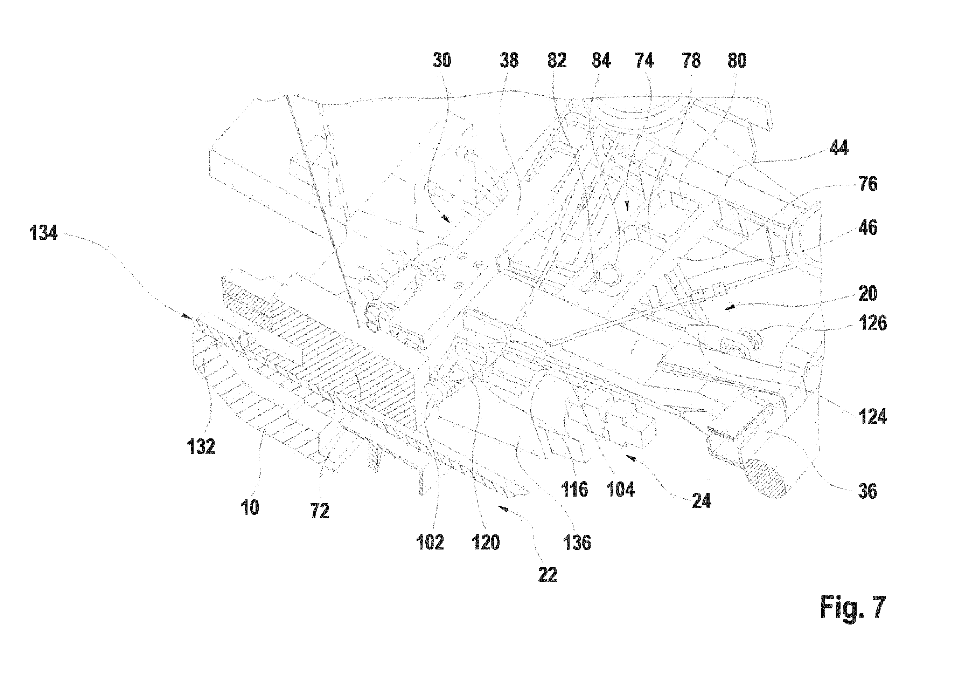

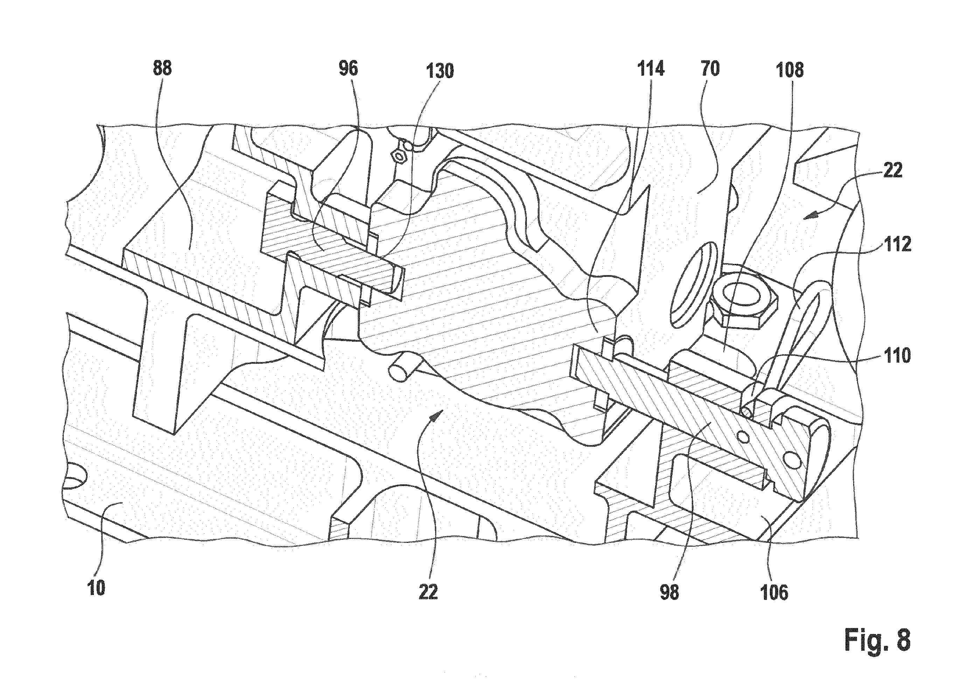

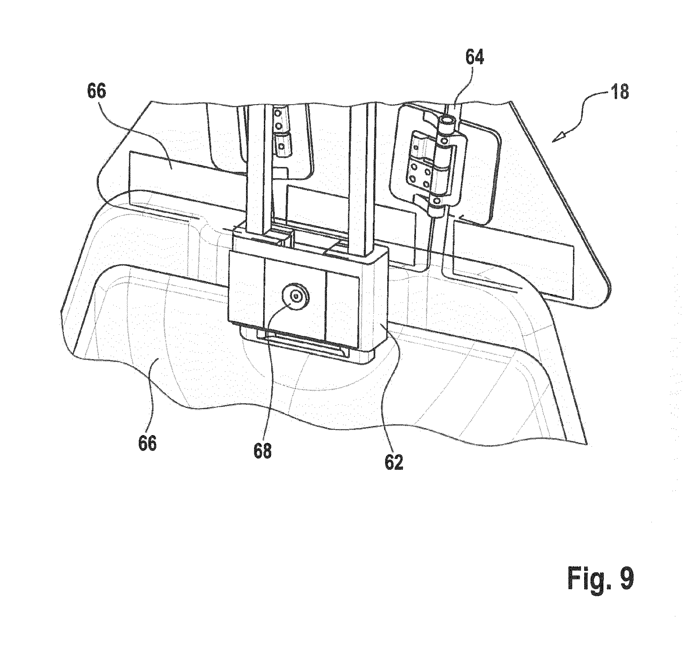

In den Figuren 1 bis 9 ist ein Ausführungsbeispiel einer Flugzeugsitzvorrichtung dargestellt. Die Flugzeugsitzvorrichtung ist Teil eines teilweise dargestellten Flugzeugsitzes 26. Dabei bildet die Flugzeugsitzvorrichtung einen großen Teil des Flugzeugsitzes 26 aus. Der Flugzeugsitz 26 ist als ein Teil eines nicht näher dargestellten Flugzeugs ausgebildet. Dabei sind in dem Flugzeug mehrere Flugzeugsitze 26 angeordnet. Der Flugzeugsitz 26 ist auf einem Kabinenboden des Flugzeugs aufgeständert. Der Kabinenboden bildet dabei eine Aufständerebene aus, auf der der Flugzeugsitz 26, der die Flugzeugsitzvorrichtung aufweist, aufgeständert ist. Zur Aufständerung der Flugzeugsitzvorrichtung weist die Flugzeugsitzvorrichtung eine Aufständereinheit 28 auf. Die Aufständereinheit 28 umfasst nicht näher dargestellte Verbindungselemente, die dazu vorgesehen sind, die Flugzeugsitzvorrichtung auf der Aufständerebene zu befestigen. Dabei weist der Kabinenboden vorzugsweise Befestigungsschienen auf, über die die Verbindungselemente der Aufständereinheit 28 den Flugzeugsitz 26 fest mit dem Kabinenboden und damit dem Flugzeug koppeln. Die Flugzeugsitzvorrichtung umfasst einen tragenden Rahmen 10. Der tragende Rahmen 10 ist mit der Aufständereinheit 28 verbunden. Der tragende Rahmen 10 bildet einen Unterbau für den Flugzeugsitz 26, der die Flugzeugsitzvorrichtung aufweist. Dabei ist der tragende Rahmen 10 zur Anbindung von zwei Flugzeugsitzen 26 vorgesehen. Grundsätzlich ist es aber auch denkbar, dass der tragende Rahmen 10 lediglich für die Anbindung des einen Flugzeugsitzes 26 oder zur Anbindung von mehr als zwei Flugzeugsitzen 26 vorgesehen ist. Der tragende Rahmen 10 umfasst mehrere Anbindungselemente, über die weitere Bauteile des Flugzeugsitzes 26 an den tragenden Rahmen 10 angebunden werden können.

Die Flugzeugsitzvorrichtung umfasst mehrere Strukturbauteile 12, 14, 16, 18, 20, 22, 24, 138. Die Strukturbauteile 12, 14, 16, 18, 20, 22, 24, 138 der Flugzeugsitzvorrichtung sind als Elemente ausgebildet, die den Flugzeugsitz 26, dessen Bestandteil die Flugzeugsitzvorrichtung ist, aufbauen. Dabei sind die Strukturbauteile 12, 14, 16, 18, 20, 22, 24, 138 derart ausgebildet, dass sie Lasten aufnehmen und in den tragenden Rahmen weiterleiten können. Das erste Strukturbauteil 12 ist als eine zentrale Kinematikeinheit ausgebildet. Das als zentrale Kinematikeinheit ausgebildete erste Strukturbauteil 12 bildet ein Montagemodul, welches in einem komplett vormontierten Zustand mit dem tragenden Rahmen 10 der Flugzeugsitzvorrichtung verbunden wird. Dazu weist der tragende Rahmen 10 zwei parallel zueinander in Sitzrichtung ausgerichtete, als Schienen ausgebildete Formschlusselemente auf, über die das als zentrale Kinematikeinheit ausgebildete erste Strukturbauteil 12 mit dem tragenden Rahmen 10 gekoppelt werden kann. Das als zentrale Kinematikeinheit ausgebildete erste Strukturbauteil 12 umfasst einen Rahmen 30, der ein Grundgerüst des als zentrale Kinematikeinheit ausgebildeten ersten Strukturbauteils 12 ausbildet. Der Rahmen 30 ist dabei aus mehreren, miteinander fest verbundenen Profilelementen 32, 34, 36, 38, 40, 42, 44, 46, 48 gebildet. Die Profilelemente 32, 34, 36, 38, 40, 42, 44, 46, 48 des Rahmens 30 sind dabei mittels Schraubenverbindungen miteinander verbunden. Grundsätzlich ist es natürlich auch denkbar, dass die Profilelemente 32, 34, 36, 38, 40, 42, 44, 46, 48, die den Rahmen 30 ausbilden, mittels anderer, dem Fachmann als sinnvoll erscheinender Verbindungsmethoden miteinander verbunden sind, wie beispielsweise durch eine Schweißverbindung, eine Nietverbindung oder eine andere Formschlussverbindung. Dabei ist es grundsätzlich auch denkbar, dass die Profilelemente 32, 34, 36, 38, 40, 42, 44, 46, 48 werkzeuglos miteinander verbindbar sind. Dabei bilden die Profilelemente 32, 34 einen äußeren Rahmen aus. Dabei sind die beiden Profilelemente 32, 34 in einem oberen Bereich des als zentrale Kinematikeinheit ausgebildeten ersten Strukturbauteils 12 seitlich angeordnet und sind jeweils an ihrem vorderen Ende über das Profilelement 36 miteinander verbunden. An einem hinteren Ende sind die beiden Profilelemente 32, 34 mittels des Profilelements 38 miteinander verbunden. Dabei ist an den hinteren Enden der seitlich angeordneten Profilelemente 32, 34 jeweils ein gelenkiger Anbindungsflansch 50, 52 angeordnet, über den weitere Strukturbauteile 14 an das als zentrale Kinematikeinheit ausgebildete Strukturbauteil 12 und damit den tragenden Rahmen 10 angebunden werden können. Die Profilelemente 40, 42 des Rahmens 30 sind jeweils gelenkig mit einem der seitlich angeordneten Profilelemente 32, 34 verbunden und erstrecken sich in Richtung der Aufständerebene, also dem tragenden Rahmen 10 der Flugzeugsitzvorrichtung entgegen. Dadurch ist der Rahmen 30 des als zentrale Kinematikeinheit ausgebildeten ersten Strukturbauteils 12 verschwenkbar und kann so verschiedene Sitz- und/oder Liegepositionen des Flugzeugsitzes 26, dessen Teil die Flugzeugsitzvorrichtung ist, ausbilden. Die Profilelemente 44, 46, 48 bilden einen inneren Rahmen der zentralen Kinematikeinheit aus. Die Profilelemente 44, 46, 48 sind beabstandet zueinander angeordnet und verbinden das Profilelement 36, das die beiden Profilelemente 32, 34 an einem vorderen Ende miteinander verbindet, und das Profilelement 38, das die beiden Profilelemente 32, 34 an einem hinteren Ende miteinander verbindet. Die Profilelemente 44, 46, 48 bilden eine Anbindungsstruktur für weitere Strukturbauteile der Flugzeugsitzvorrichtung und weitere Elemente des als zentrale Kinematikeinheit ausgebildeten ersten Strukturbauteils 12.

Das als zentrale Kinematikeinheit ausgebildete Strukturbauteil 12 ist werkzeuglos dem tragenden Rahmen 10 verbindbar. Der Dazu weist die Flugzeugsitzvorrichtung ein manuell befestigbares Befestigungsmittel 134 auf, das händisch betätigbar ist. Das manuell betätigbare Befestigungsmittel 134 verbindet das als zentrale Kinematikeinheit ausgebildete Strukturbauteil 12 mit dem tragenden Rahmen 10. Dabei wird das als zentrale Kinematikeinheit ausgebildete Strukturbauteil 12 direkt mit dem tragenden Rahmen 10 verbunden. Dabei ist das als zentrale Kinematikeinheit ausgebildete Strukturbauteil 12 lediglich über die als Schienen ausgebildeten Formschlusselemente des tragenden Rahmens 10 und das Befestigungsmittel 134 mit dem tragenden Rahmen 10 gekoppelt.

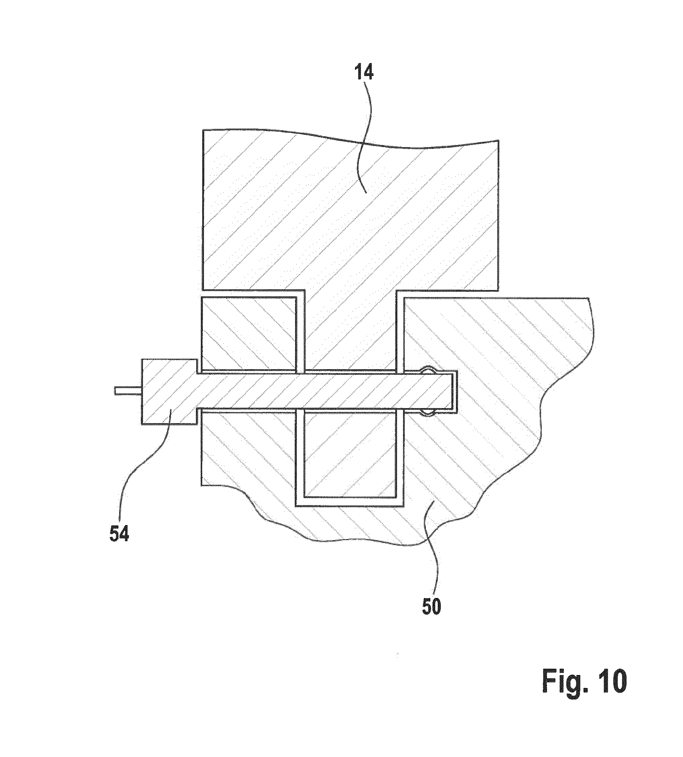

Das zweite Strukturbauteil 14 ist als eine Rückenlehne ausgebildet. Das zweite, als Rückenlehne ausgebildete Strukturbauteil 14 ist dazu vorgesehen, werkzeuglos mit dem tragenden Rahmen 10 verbunden zu werden. Das zweite, als Rückenlehne ausgebildete Strukturbauteil 14 ist in einem montierten Zustand mit dem als zentrale Kinematikeinheit ausgebildeten Strukturbauteil 12 verbunden. Das zweite, als Rückenlehne ausgebildete Strukturbauteil 14 ist dabei seitlich jeweils mit den gelenkigen Anbindungsflanschen 50, 52 verbunden, die an dem Rahmen 30 des ersten Strukturbauteils 12 angebunden sind. Die Flugzeugsitzvorrichtung umfasst zwei manuell betätigbare Befestigungsmittel 54, 56, die das als Rückenlehne ausgebildete Strukturbauteil 14 an den tragenden Rahmen 10 anbinden. Die zwei manuell betätigbaren Befestigungsmittel 54, 56 sind als Federbolzen ausgebildet. Die als Federbolzen ausgebildeten Befestigungsmittel 54, 56 sind dabei jeweils in einem Durchgangsloch in dem jeweiligen Anbindungsflansch 50, 52 fest angeordnet und weisen einen axial beweglichen Teilbereich auf. Der axial bewegliche Teilbereich des Befestigungsmittels 54, 56 wird dabei während einer Montage manuell in eine eingefahrene Stellung gebracht, sodass das als Rückenlehne ausgebildete Strukturbauteil 14 korrekt zu den Anbindungsflanschen 50, 52 und dadurch den Befestigungsmitteln 54, 56 ausgerichtet ist. Das als Rückenlehne ausgebildete Strukturbauteil 14 weist je Befestigungsmittel 54, 56 ein als Durchgangsloch ausgebildetes Formschlusselement auf. Die axial beweglichen Teilbereiche werden zur Verbindung des als Rückenlehne ausgebildeten Strukturbauteils 14 mit dem als zentrale Kinematikeinheit ausgebildeten Strukturbauteil 12 durch die als Durchgangslöcher ausgebildeten Formschlusselemente geführt und in als Ausnehmungen ausgebildete Formschlusselemente in den Anbindungsflanschen 50, 52 eingerastet. Dadurch ist das als Rückenlehne ausgebildete Strukturbauteil 14 mit dem als zentrale Kinematikeinheit ausgebildeten Strukturbauteil 12 verbunden. Figur 10 zeigt dabei schematisch eine Schnittansicht durch einen Anbindungspunkt, in dem das als Rückenlehne ausgebildete Strukturbauteil 14 über ein Befestigungsmittel 54 mit dem Anbindungsflansch 50 verbunden ist.

Das dritte Strukturbauteil 16 ist als eine Sitzpfanne ausgebildet. Das als Sitzpfanne ausgebildete Strukturbauteil 16 ist dazu vorgesehen, werkzeuglos an den Rahmen 30 des als zentrale Kinematikeinheit ausgebildeten ersten Strukturbauteils 12 montiert zu werden. Das dritte, als Sitzpfanne ausgebildete Strukturbauteil 16 ist dazu vorgesehen, werkzeuglos an den tragenden Rahmen 10 angebunden zu werden. Das als Sitzpfanne ausgebildete Strukturbauteil 16 ist in einem montierten Zustand mit den Profilelementen 32, 34 des Rahmens 30 des als zentrale Kinematikeinheit ausgebildeten Strukturbauteils 12 verbunden. Das als Sitzpfanne ausgebildete Strukturbauteil 16 ist werkzeuglos mit dem als zentrale Kinematikeinheit ausgebildeten Strukturbauteil 12 bedienbar. Zur werkzeuglosen Anbindung des als Sitzpfanne ausgebildeten Strukturbauteils 16 weist die Flugzeugsitzvorrichtung fünf manuell betätigbare Befestigungsmittel 58 auf. Die Befestigungsmittel 58 sind als Drehbolzen ausgebildet. Die als Drehbolzen ausgebildeten weiteren Befestigungsmittel 58 weisen an einer Unterseite ein Formschlusselement auf, das dazu vorgesehen ist, durch Drehung des Befestigungsmittels 58 in einen Formschluss mit einem korrespondierend ausgebildeten Formschlusselement gebracht zu werden. Zur Anbindung des als Sitzpfanne ausgebildeten Strukturbauteils 16 weist der Rahmen 30 des als zentrale Kinematikeinheit ausgebildeten Strukturbauteils 12 je Befestigungsmittel 58 eine Aufnahme 60 auf. Die Aufnahmen 60 weisen dabei jeweils einen Hinterschnitt auf, in die die als Drehbolzen ausgebildeten Befestigungsmittel 58 in einem montierten Zustand eingreifen. Dazu werden die als Drehbolzen ausgebildeten Befestigungsmittel 58 bei der Montage mit ihrer Unterseite in die Aufnahmen 60 eingeführt und dort dann um einen definierten Winkel, beispielsweise 180 Grad, gedreht, sodass das Formschlusselement des Befestigungsmittel 58 einen Formschluss mit dem Hinterschnitt der Aufnahme 60 eingeht. Dadurch sind die Befestigungsmittel 58 fest mit dem Rahmen 30 des als zentrale Kinematikeinheit ausgebildeten Strukturbauteils 12 verbunden. Zur Befestigung des als Sitzpfanne ausgebildeten Strukturbauteils 16 weist das als Sitzpfanne ausgebildete Strukturbauteil 16 je Befestigungsmittel 58 ein Durchgangsloch 122 auf. In einem montierten Zustand sind die Befestigungsmittel 58 durch die Durchgangslöcher 122 des als Sitzpfanne ausgebildeten Strukturbauteils 16 geführt und formschlüssig in den Aufnahmen 60 des Rahmens 30 befestigt, wodurch das als Sitzpfanne ausgebildete Strukturbauteil 16 fest mit dem Rahmen 30 gekoppelt ist. Durch einfaches Drehen der Befestigungsmittel 58 mit einer Hand kann das als Sitzpfanne ausgebildete Strukturbauteil 16 fest mit dem Rahmen 30 verbunden oder von diesem gelöst werden. Grundsätzlich ist es natürlich auch denkbar, dass das als Sitzpfanne ausgebildete Strukturbauteil 16 mittels anderer Befestigungsmittel, wie beispielsweise Federbolzen, Plastikclips, Rastelementen, Handschraubverschlüssen oder anderen, dem Fachmann als sinnvoll erscheinenden manuell betätigbaren Befestigungsmitteln fest mit dem Rahmen 30 verbunden ist.

Das vierte Strukturbauteil 18 ist als eine Kopfstütze ausgebildet. Das als Kopfstütze ausgebildete vierte Strukturbauteil 18 ist dazu vorgesehen, werkzeuglos an das Strukturbauteil 14 und damit den tragenden Rahmen 10 montiert zu werden. Das als Kopfstütze ausgebildete Strukturbauteil 18 ist in einem montierten Zustand an dem als Rückenlehne ausgebildeten Strukturbauteil 14 angebracht. Das als Kopfstütze ausgebildete Strukturbauteil 18 umfasst einen Grundkörper 62, über den das als Kopfstütze ausgebildete Strukturbauteil 18 an das als Rückenlehne ausgebildete Strukturbauteil 14 angebunden ist. Der Grundkörper 62 bildet eine Lagerung aus, über die ein Kopfablageelement 64 des als Kopfstütze ausgebildeten Strukturbauteils 18 über ein Schienenelement 66 in einer Höhe verschiebbar ist. Zur Anbindung des als Kopfstütze ausgebildeten vierten Strukturbauteils 18 weist die Flugzeugsitzvorrichtung ein manuell betätigbares Befestigungsmittel 68 auf. Das manuell betätigbare Befestigungsmittel 68 ist als ein Federbolzen ausgebildet. Zur Verbindung der beiden Strukturbauteile 14, 18 weisen das als Rückenlehne ausgebildete Strukturbauteil 14 an seiner Rückseite und das als Kopfstütze ausgebildete Strukturbauteil 18 in seinem Grundkörper 62 jeweils eine nicht näher dargestellte Aufnahme auf. Über die Aufnahmen sind die beiden Strukturbauteile 14, 18 mittels des als Federbolzen ausgebildeten Befestigungsmittels 68 miteinander verbindbar. Zur Verbindung der beiden Strukturbauteile 14, 18 werden deren Aufnahmen in einer Flucht ausgerichtet und das als Federbolzen ausgebildete Befestigungsmittel 68 manuell in die Aufnahmen eingeführt, um die beiden Strukturbauteile 14, 18 fest miteinander zu verbinden. Zum Lösen der Verbindung zwischen dem als Rückenlehne ausgebildeten Strukturbauteil 14 und dem als Kopfstütze ausgebildeten Strukturbauteil 18 wird das als Federbolzen ausgebildete Befestigungsmittel 68 beispielsweise durch Drücken manuell betätigt, um die formschlüssige Verbindung zwischen den beiden Strukturbauteilen 14, 18 zu lösen. Zur Verdrehsicherung des Grundkörpers 62 zu dem als Rückenlehne ausgebildeten Strukturbauteil 14 weisen der Grundkörper 62 und das als Rückenlehne ausgebildete Strukturbauteil 14 mehrere, nicht näher dargestellte Formschlusselemente auf. Die Formschlusselemente des Grundkörpers 62 sind als Erhebungen ausgebildet, die zur Verdrehsicherung in die als Aussparungen ausgebildeten Formschlusselemente, die äquivalent zu den Formschlusselementen des Grundkörpers 62 ausgebildet sind, eingreifen.

Das fünfte Strukturbauteil 20 ist als eine Aktuatoreinheit ausgebildet. Das als Aktuatoreinheit ausgebildete Strukturbauteil 20 umfasst einen Aktuator 70. Zur Halterung des Aktuators 70 umfasst das als Aktuatoreinheit ausgebildete Strukturbauteil 20 eine Gestellvorrichtung 74. Die Gestellvorrichtung 74 ist dazu vorgesehen, den Aktuator 70 in einem montierten Zustand zu fixieren und ihn so in einer Position zu halten, in der er für einen Betrieb in der Flugzeugsitzvorrichtung vorgesehen ist. Über die Gestellvorrichtung 74 ist der Aktuator 70 in der Flugzeugsitzvorrichtung und dadurch in dem Flugzeugsitz 26 positioniert und kann so auf entsprechende Elemente des Flugzeugsitzes 26 eine Kraft ausüben, um diese zu verstellen. Der Aktuator 70 ist zur Verstellung eines als Fußstütze ausgebildeten Strukturbauteils 24 ausgebildet. Das als Aktuatoreinheit ausgebildete Strukturbauteil 20 ist dabei als eine vormontierbare Montagegruppe ausgebildet. Das als Aktuatoreinheit ausgebildete Strukturbauteil 20 wird bei einer Montage komplett vormontiert mit dem Aktuator 70 an den Rahmen 30, des Strukturbauteils 12 montiert. Die Gestellvorrichtung 74 weist dazu ein oberes Profilelement 76 auf. Das obere Profilelement 76 ist in an einer Oberseite des Aktuators 70 befestigt. Dabei ist das Profilelement 76 über zwei nicht näher dargestellte, manuell betätigbare Befestigungsmittel fest mit dem Aktuator 70 verbunden. Die nicht näher dargestellten Befestigungsmittel zur Anbindung des Aktuators 70 an das Profilelement 76 sind dabei als Federbolzen ausgebildet. Dadurch lässt sich das Profilelement 76 vorteilhaft einfach und händisch von dem Aktuator 70 lösen. Das Profilelement 76 weist eine rechteckige Grundform auf, in die zwei Ausnehmungen 78, 80 eingebracht sind. Die Ausnehmungen 78, 80 sind dabei auf einer dem Aktuator 70 in montiertem Zustand abgewandten Seite angeordnet. Zur Anbindung des als Aktuatoreinheit ausgebildeten Strukturbauteils 20 an den tragenden Rahmen 10 ist das Profilelement 76 der Gestellvorrichtung 74 in montiertem Zustand mit den Profilelementen 44, 46 des Rahmens 30 des als zentrale Aktuatoreinheit ausgebildeten Strukturbauteils 12 verbunden. Dabei verbindet das Profilelement 76 die beiden Profilelemente 44, 46 des Rahmens 30. Zur Verbindung des Profilelements 76 mit dem Rahmen 30 des Strukturbauteils 12 weist die Flugzeugsitzvorrichtung ein manuell betätigbares Befestigungsmittel 82 auf. Das manuell betätigbare Befestigungsmittel 82 ist dabei dazu vorgesehen, von oben betätigt zu werden. Dabei ist das manuell betätigbare Befestigungsmittel 82 als ein Federbolzen ausgebildet. Das als Federbolzen ausgebildete Befestigungsmittel 82 ist dabei in einer nicht näher dargestellten, als Durchgangsloch ausgebildeten Aufnahme in dem Profilelement 76 angeordnet. Dabei ist das Befestigungsmittel 82 auf einer dem Profilelement 46 zugewandten Seite des Profilelements 76 angeordnet. Dabei weist das Befestigungsmittel 82 an einem vorderen Ende einen axial beweglichen Teilbereich auf, der zu einem Formschluss vorgesehen ist. Zur Aufnahme des axial beweglichen Teilbereichs weist das Profilelement 46 seitlich eine Aufnahme auf, in die der axial bewegliche Teilbereich des Befestigungsmittels 82 zu einer formschlüssigen Verbindung eingreift. Ein hinteres Ende des Befestigungsmittels 82 ragt dabei in die Ausnehmung 78 des Profilelements 76. Dabei ist an dem hinteren Ende des Befestigungsmittels 82 ein Betätigungsring 84 angebracht, der mit dem axial beweglichen Teilbereich gekoppelt ist und über den der axial bewegliche Teilbereich des Befestigungsmittels 82 von einer Person manuell bewegt werden kann. Auf einer dem Profilelement 44 zugewandten Seite weist das Profilelement 76 einen starren Stift auf, der sich von dem Profilelement 76 aus in Richtung des Profilelements 76 erstreckt. Der Stift ist dabei nicht näher dargestellt, wobei es auch denkbar ist, dass das Profilelement 76 an der dem Profilelement 44 zugewandten Seite zwei oder mehr Stifte aufweist. Das Profilelement 76 weist auf einer nach innen in Richtung des Profilelements 76 ausgerichteten Seite eine zu dem Stift des Profilelements 76 korrespondierend ausgebildete Aufnahme auf, in der der Stift zur Anbindung des als Aktuatoreinheit ausgebildeten Strukturbauteils 20, in einem montierten Zustand formschlüssig angeordnet ist. Der Aktuator 70 umfasst eine Betätigungsstange 124. Die Betätigungsstange 124 des Aktuators 70 ist zur Verstellung des als Fußstütze ausgebildeten Strukturbauteils 24 in einer Haupterstreckungsrichtung der Bestätigungsstange 124 axial verschiebbar. Zur Verstellung des als Fußstütze ausgebildeten Strukturbauteils 24 ist ein vorderes Ende der Betätigungsstange 124 fest mit dem als Fußstütze ausgebildeten Strukturbauteil 24 gekoppelt. Dazu bildet die Betätigungsstange 124 an dem vorderen Ende eine Aufnahme aus. Das als Fußstütze ausgebildete Strukturbauteil 24 bildet ebenfalls eine Aufnahme aus. Zur Verbindung der Betätigungsstange 124 mit dem als Fußstütze ausgebildeten Strukturbauteil 24 umfasst die Flugzeugsitzvorrichtung ein manuell betätigbares Befestigungsmittel 126. Das manuell betätigbare Befestigungsmittel 126 ist als ein Bolzen ausgebildet. Das als Bolzen ausgebildete Befestigungsmittel 126 ist zur Verbindung der Betätigungsstange 124 und des als Fußstütze ausgebildeten Strukturbauteils 24 durch die Aufnahmen der Betätigungsstange 124 und des als Fußstütze ausgebildeten Strukturbauteils 24 geführt und an einem, einem Kopfende gegenüberliegenden Ende des als Bolzen ausgebildeten Befestigungsmittels 126, mit einer Sicherungsfeder gesichert. Zur Montage kann das als Bolzen ausgebildete Befestigungsmittel 126 einfach mit in die Aufnahmen der Betätigungsstange 124 und des als Fußstütze ausgebildeten Strukturbauteils 24 geführt werden und händisch mit der Sicherungsfeder gesichert werden. Eine Demontage erfolgt dementsprechend durch händisches Entfernen der Sicherungsfeder und durch Lösen des als Bolzen ausgebildeten Befestigungsmittels 126 aus den Aufnahmen der Betätigungsstange 124 und des als Fußstütze ausgebildeten Strukturbauteils 24.

Das sechste Strukturbauteil 22 ist ebenfalls als eine Aktuatoreinheit ausgebildet. Das als Aktuatoreinheit ausgebildete Strukturbauteil 22 umfasst einen Aktuator 72. Der Aktuator 72 ist zur Verstellung des als zentrale Kinematikeinheit ausgebildeten Strukturbauteils 12 zu dem tragenden Rahmen 10 vorgesehen. Zur Anbindung des als Aktuatoreinheit ausgebildeten Strukturbauteils 22 weist die Flugzeugsitzvorrichtung mehrere, manuell betätigbare Befestigungsmittel 96, 98, 134 auf. Die Befestigungsmittel 96, 98 sind dazu vorgesehen, ein unteres Ende des Strukturbauteils 22 mit dem als zentrale Kinematikeinheit ausgebildeten Strukturbauteil 12 zu verbinden. Dazu weist der Rahmen 30 des als zentrale Kinematikeinheit ausgebildeten Strukturbauteils 12 ein Aufnahmeelement 88 und ein weiteres Aufnahmeelement 106 auf, die fest mit dem Rahmen 30 des als zentrale Kinematikeinheit ausgebildeten Strukturbauteils 12 verbunden sind. Die Aufnahmeelemente 88, 106 sind beabstandet zueinander angeordnet und das als Aktuatoreinheit ausgebildete Strukturbauteil 22 ist in einem montierten Zustand zwischen den beiden Aufnahmeelementen 88, 106 angeordnet. Das Befestigungsmittel 96 ist als ein Gewindebolzen ausgebildet, der fest in dem Aufnahmeelement 88 eingeschraubt ist. Das Befestigungsmittel 96 weist an einem vorderen Ende einen bolzenförmigen Teilbereich auf, der dazu vorgesehen ist, in einem montierten Zustand des Strukturbauteils 22 in eine Aufnahme in dem Strukturbauteil 22 einzurasten. Das Befestigungsmittel 96 ist in eine Aufnahme des Aufnahmeelements 88 eingeschraubt und steht mit dem vorderen Ende in Richtung des Aufnahmeelements 106 über das Aufnahmeelement 88 hinaus. Das Befestigungsmittel 98 ist als ein Bolzen mit einem Kopf ausgebildet. Das Aufnahmeelement 106 weist ein Durchgangsloch 108 auf, durch das das Befestigungsmittel 98 in montiertem Zustand geführt ist. Dabei weist das Durchgangsloch 108 einen Einstich 110 auf. Die Flugzeugsitzvorrichtung umfasst eine Sicherungsfeder 112, die das Befestigungsmittel 98 in montiertem Zustand sichert. Die Sicherungsfeder 112 ist als ein Federstecker ausgebildet. Zur Kopplung mit dem als Bolzen ausgebildeten Befestigungsmittel 98 weist das Befestigungsmittel 98 ein quer zu einer Haupterstreckung verlaufendes Durchgangsloch auf. Die Sicherungsfeder 112 ist dabei in montiertem Zustand durch das Durchgangsloch in dem Befestigungsmittel 98 geführt. Dabei ist die Sicherungsfeder 112 in dem Einstich 110 angeordnet, wodurch ein Lösen des Befestigungsmittels 98 aus dem Aufnahmeelement 106 verhindert werden kann. Zur Kopplung mit dem Befestigungsmittel 98 weist das Strukturbauteil 22 eine Aufnahme 114 auf, die als ein Sackloch ausgebildet ist. In montiertem Zustand ist ein vorderes Ende des Befestigungsmittels 98 in der Aufnahme 114 angeordnet und koppelt das Strukturbauteil 22 so formschlüssig mit dem Aufnahmeelement 106 und somit mit dem tragenden Rahmen 10.Zur Montage des als Aktuatoreinheit ausgebildeten Strukturbauteils 22 wird das als Aktuatoreinheit ausgebildete Strukturbauteil 22 zwischen die beiden Aufnahmeelemente 88, 106 geführt, wobei zwischen den beiden Aufnahmeelementen 88, 106 auch bei eingeschraubtem Befestigungsmittel 96 genügend Platz für einen Teilbereich des als Aktuatoreinheit ausgebildeten Strukturbauteils 22 ist, der die Aufnahmen 114, 130 aufweist. Zunächst wird das als Gewindebolzen ausgebildete Befestigungsmittel 96 in die Aufnahme 130 des Strukturbauteils 22 eingeführt und formschlüssig mit diesem verbunden. Nun kann das als Bolzen ausgebildete Befestigungsmittel 98 durch das Durchgangsloch 108 des Aufnahmeelements 106 in die Aufnahme 114 des Strukturbauteils 22 eingeführt werden und mit der Sicherungsfeder 112 gesichert werden. Dabei bildet das als Bolzen ausgebildete Befestigungsmittel 98 in einem vorderen Bereich einen nicht näher dargestellten Anschlag auf, der in montiertem Zustand an einer Außenseite des Strukturbauteils 22 anliegt und das Strukturbauteil 22 so in Axialrichtung zu den Befestigungsmitteln 96, 98 fixiert.

Der Aktuator 72 ist zur Verschiebung des als zentrale Kinematikeinheit ausgebildeten Strukturbauteils 12 zu dem tragenden Rahmen 10 vorgesehen. Über den Aktuator 72 kann das als zentrale Kinematikeinheit ausgebildete Strukturbauteil 12 über die als Schienen ausgebildeten Formschlusselemente zu dem tragenden Rahmen 10 verschoben werden. Der Aktuator 72 weist eine Betätigungsstange 132 auf. Die Betätigungsstange 132 des Aktuators 72 ist zur Verstellung des als zentrale Kinematikeinheit ausgebildeten Strukturbauteils 12 in einer Haupterstreckungsrichtung der Bestätigungsstange 132 axial verschiebbar. Zur Verstellung des als zentrale Kinematikeinheit ausgebildeten Strukturbauteils 12 ist ein hinteres Ende der Betätigungsstange 132 fest mit dem tragenden Rahmen 10 gekoppelt. Dazu bildet die Betätigungsstange 132 an dem hinteren Ende eine Aufnahme aus. Der tragende Rahmen 10 umfasst ein Anbindungselement, das eine korrespondierend ausgebildete Aufnahme ausbildet. Das Anbindungselement ist fest mit dem tragenden Rahmen 10 verbunden. Zur Verbindung der Betätigungsstange 132 mit dem tragenden Rahmen 10 umfasst die Flugzeugsitzvorrichtung das manuell betätigbare Befestigungsmittel 134. Das manuell betätigbare Befestigungsmittel 134 ist als ein Federbolzen ausgebildet. Die Betätigungsstange 132 wird über die Aufnahme der Betätigungsstange 132 und das Anbindungselement des tragenden Rahmens 10 sowie das Befestigungsmittel 134 mit dem tragenden Rahmen 10 verbunden. Dabei lässt sich eine Verbindung der Betätigungsstange 132 und des Anbindungselements des tragenden Rahmens 10 über das als Federbolzen ausgebildete Befestigungsmittel 134 händisch herstellen und wieder lösen. Über das als Aktuatoreinheit ausgebildete Strukturbauteil 22 und dessen Anbindung an den tragenden Rahmen 10 ist das als zentrale Kinematikeinheit ausgebildete Strukturbauteil 12, dessen Teil das Strukturbauteil 22 ist, verliersicher mit dem tragenden Rahmen 10 verbunden.

Das siebte Strukturbauteil 24 ist ebenfalls als eine Aktuatoreinheit ausgebildet. Das als Aktuatoreinheit ausgebildete Strukturbauteil 24 ist zwischen dem fünften, als Aktuatoreinheit ausgebildeten Strukturbauteil 20 und dem sechsten, als Aktuatoreinheit ausgebildeten Strukturbauteil 22 angeordnet. Das siebte, als Aktuatoreinheit ausgebildete Strukturbauteil 24 umfasst einen Aktuator 136. Der Aktuator 136 ist dazu vorgesehen, eine Kinematik des als zentrale Kinematikeinheit ausgebildeten Strukturbauteils 12 zu verstellen. Dadurch kann mittels des Aktuators 136 eine Position des Flugzeugsitzes 26, dessen Teil die Flugzeugsitzvorrichtung ist, verstellt werden.

Zur Anbindung eines oberen Bereichs des Strukturbauteils 24 an das als zentrale Kinematikeinheit ausgebildete Strukturbauteil 12 umfasst die Flugzeugsitzvorrichtung ein Aufnahmeelement 104. Das Aufnahmeelement 104 ist fest mit dem Profilelement 46 des Rahmens 30 des Strukturbauteils 12 verbunden. Das Aufnahmeelement 104 bildet eine U-förmige Grundform aus. Dabei ist das Strukturbauteil 24 in einem montierten Zustand zwischen zwei Seitenbereichen 116, 118 des U-förmig ausgebildeten Aufnahmeelements 104 angeordnet. Dabei ist eine Anbindung des oberen Bereichs des Strukturbauteils 24 im Wesentlichen äquivalent zur Anbindung des unteren Bereichs des Strukturbauteils 22 an die Aufnahmeelemente 88, 106. Zur Anbindung des Strukturbauteils 24 an das U-Förmige Aufnahmeelement 104 umfasst die Flugzeugsitzvorrichtung ein erstes manuell betätigbares Befestigungsmittel 100 und ein zweites manuell betätigbares Befestigungsmittel 102 auf. Das Befestigungsmittel 100 ist als ein Gewindebolzen ausgebildet, der fest in dem Seitenbereich 118 des Aufnahmeelements 104 eingeschraubt ist und einen bolzenförmigen Teilbereich aufweist, der in montiertem Zustand in eine Aufnahme in dem Strukturbauteil 22 eingreift. Das Befestigungsmittel 102 ist als ein Bolzen ausgebildet, der in einem Durchgangsloch in dem Seitenbereich 116 des Aufnahmeelements 104 angeordnet ist und in montiertem Zustand mit einem vorderen Ende formschlüssig in eine Aufnahme in dem Strukturbauteil 22 eingreift und über eine Sicherungsfeder 120 in dem Durchgangsloch gesichert ist. Montiert wird das Strukturbauteils 24 mit seinem oberen Ende äquivalent zu der Montage des unteren Bereichs des Strukturbauteils 22.

Weiter weist die Flugzeugsitzvorrichtung ein weiteres Befestigungsmittel 86 auf, das dazu vorgesehen ist, das als Aktuatoreinheit ausgebildete Strukturbauteil 24 einem unteren Bereich des als zentrale Kinematikeinheit ausgebildeten Strukturbauteils 12 anzubinden. Das Befestigungsmittel 86 ist als ein Kugelsperrbolzen ausgebildet. Alternativ zur Ausgestaltung als Kugelsperrbolzen ist es denkbar, dass das Befestigungsmittel 86 als ein Bolzen mit einer Federspanne oder einem anderem Federelement ausgebildet ist. Das Aufnahmeelement 88, welches fest mit dem Rahmen 30 des als zentrale Kinematikeinheit ausgebildeten Strukturbauteils 12 verbunden ist, weist eine Aufnahme 90 auf. Das als Aktuatoreinheit ausgebildete Strukturbauteil 20 umfasst eine als Durchgangsloch 92 ausgebildete Aufnahme, die in montiertem Zustand über das als Kugelsperrbolzen ausgebildete manuell betätigbare Befestigungsmittel 86 mit der Aufnahme 90 des Aufnahmeelements 88 verbunden ist. Zur Montage oder Demontage des als Aktuatoreinheit ausgebildeten Strukturbauteils 20 können alle Befestigungsmittel 86, 102 manuell von einer Person betätigt werden, um das als Aktuatoreinheit ausgebildete Strukturbauteil 20 mit dem Rahmen 30 des als zentrale Kinematikeinheit ausgebildeten Strukturbauteils 12 zu koppeln oder von dem tragenden Rahmen 10 zu lösen.

Das achte Strukturbauteil 138 ist als Beinauflage ausgebildet. Das achte, als Beinauflage ausgebildete Strukturbauteil 138 ist dazu vorgesehen, werkzeuglos mit dem tragenden Rahmen 10 verbunden zu werden. Dazu weist die Flugzeugsitzvorrichtung mehrere, nicht näher dargestellte manuell betätigbare Befestigungsmittel auf. Die Befestigungsmittel sind dabei wie die Befestigungsmittel 58 zur Befestigung des als Sitzpfanne ausgebildeten Strukturbauteils 16 als Drehbolzen ausgebildet, die händisch betätigbar sind. Grundsätzlich ist es dabei natürlich auch denkbar, dass die Befestigungsmittel 58 zur Anbindung des als Beinauflage ausgebildeten Strukturbauteils 138 als Rastelemente oder andere, dem Fachmann als sinnvoll erscheinende manuell betätigbare Befestigungsmittel ausgebildet sind.

### Bezugszeichen

- 10: tragender Rahmen
- 12: Strukturbauteil
- 14: Strukturbauteil
- 16: Strukturbauteil
- 18: Strukturbauteil
- 20: Strukturbauteil
- 22: Strukturbauteil
- 24: Strukturbauteil
- 26: Flugzeugsitz
- 28: Aufständereinheit
- 30: Rahmen
- 32: Profilelement
- 34: Profilelement
- 36: Profilelement
- 38: Profilelement
- 40: Profilelement
- 42: Profilelement
- 44: Profilelement
- 46: Profilelement
- 48: Profilelement
- 50: Anbindungsflansch
- 52: Anbindungsflansch
- 54: Befestigungsmittel
- 56: Befestigungsmittel
- 58: Befestigungsmittel
- 60: Aufnahme
- 62: Grundkörper
- 64: Kopfablageelement
- 66: Schienenelement
- 68: Befestigungsmittel
- 70: Aktuator
- 72: Aktuator
- 74: Gestellvorrichtung
- 76: Profilelement
- 78: Ausnehmung
- 80: Ausnehmung
- 82: Befestigungsmittel
- 84: Betätigungsring
- 86: Befestigungsmittel
- 88: Aufnahmeelement
- 90: Aufnahme
- 92: Durchgangsloch
- 96: Befestigungsmittel
- 98: Befestigungsmittel
- 100: Befestigungsmittel
- 102: Befestigungsmittel
- 104: Aufnahmeelement
- 106: Aufnahmeelement
- 108: Durchgangsloch
- 110: Einstich
- 112: Sicherungsfeder
- 114: Aufnahme
- 116: Seitenbereich
- 118: Seitenbereich
- 120: Sicherungsfeder
- 122: Durchgangsloch
- 124: Betätigungsstange
- 126: Befestigungsmittel
- 130: Aufnahme
- 132: Betätigungsstange
- 134: Befestigungsmittel
- 136: Aktuator
- 138: Strukturbauteil

## Patentansprüche

1. Flugzeugsitzvorrichtung mit einem tragenden Rahmen (10) und mehreren, an dem tragenden Rahmen (10) befestigten Strukturbauteilen (12, 14, 16, 18, 20, 22, 24), **dadurch gekennzeichnet, dass** wenigstens eines der Strukturbauteile (12, 14, 16, 18, 20, 22, 24) dazu vorgesehen ist, werkzeuglos an dem tragenden Rahmen (10) und/oder an einem anderen Strukturbauteil (12, 14, 16, 18, 20, 22, 24) montiert zu werden.

2. Flugzeugsitzvorrichtung nach Anspruch 1, **gekennzeichnet durch** wenigstens ein manuell betätigbares Befestigungsmittel (54, 56, 58, 60, 68, 82, 86, 96, 98, 100, 102), das dazu vorgesehen ist, das wenigstens eine der Strukturbauteile (12, 14, 16, 18, 20, 22, 24) an dem tragenden Rahmen (10) und/oder an einem anderen Strukturbauteil (12, 14, 16, 18, 20, 22, 24) anzubringen.

3. Flugzeugsitzvorrichtung nach Anspruch 1 oder 2, **dadurch gekennzeichnet, dass** eines der Strukturbauteile (14) als eine Rückenlehne ausgebildet ist.

4. Flugzeugsitzvorrichtung nach einem der vorhergehenden Ansprüche, **dadurch gekennzeichnet, dass** eines der Strukturbauteile (16) als eine Sitzpfanne ausgebildet ist.

5. Flugzeugsitzvorrichtung nach einem der vorhergehenden Ansprüche, **dadurch gekennzeichnet, dass** eines der Strukturbauteile (12) als eine zentrale Kinematikeinheit ausgebildet ist.

6. Flugzeugsitzvorrichtung nach einem der vorhergehenden Ansprüche, **dadurch gekennzeichnet, dass** eines der Strukturbauteile (18) als eine Kopfstütze ausgebildet ist.

7. Flugzeugsitzvorrichtung nach einem der vorhergehenden Ansprüche, **dadurch gekennzeichnet, dass** eines der Strukturbauteile (20, 22) als eine Aktuatoreinheit mit einem Aktuator (70, 72) ausgebildet ist.

8. Flugzeugsitzvorrichtung nach einem der vorhergehenden Ansprüche, **dadurch gekennzeichnet, dass** das wenigstens eine betätigbare Befestigungsmittel (82) dazu vorgesehen ist, von oben betätigt zu werden.

9. Flugzeugsitzvorrichtung zumindest nach Anspruch 2, **dadurch gekennzeichnet, dass** das Befestigungsmittel (54, 56, 68, 82, 96, 100) als ein Federbolzen ausgebildet ist.

10. Flugzeugsitzvorrichtung zumindest nach Anspruch 2, **gekennzeichnet durch** wenigstens eine Sicherungsfeder (112, 120), die das Befestigungsmittel (98, 102) zur Anbindung in einem montierten Zustand sichert.

11. Flugzeugsitzvorrichtung zumindest nach Anspruch 7, **dadurch gekennzeichnet, dass** das als Aktuator (70, 72) ausgebildete Strukturbauteil (20, 22) dazu vorgesehen ist, komplett vormontiert mit dem Aktuator (70, 72) in den tragenden Rahmen (10) und/oder ein anderes Strukturbauteil (12) eingebaut zu werden.

12. Flugzeugsitzvorrichtung nach einem der vorhergehenden Ansprüche, **dadurch gekennzeichnet, dass** zumindest vier Strukturbauteile (12, 14, 16, 18, 20, 22, 24) werkzeuglos an dem tragenden Rahmen montierbar sind.

13. Flugzeugsitz mit einer Flugzeugsitzvorrichtung nach einem der vorhergehenden Ansprüche.
